# EUROPEAN PATENT APPLICATION

(11) **EP 3 703 033 A1**
(43) Date of publication of application: **02.09.2020**
(21) Application number: 20158705.2
(22) Date of filing: 21.02.2020
(51) Int. Cl.: G08G 1/16, B60W 30/095, G01S 13/931, G08G 1/0967, G05D 1/02

(54) **TRACK PREDICTION METHOD AND DEVICE FOR OBSTACLE AT JUNCTION**

(30) Priority: 26.02.2019 CN 201910142037
(71) Applicant: Baidu Online Network Technology (Beijing) Co., Ltd., Beijing 100085 (CN)
(72) Inventor: ZHAN, Kun, Beijing, Beijing 100085 (CN); PAN, Yifeng, Beijing, Beijing 100085 (CN); YANG, Xuguang, Beijing,, Beijing 100085 (CN); CHEN, Zhongtao, Beijing, Beijing 100085 (CN); JIANG, Feiyi, Beijing, Beijing 100085 (CN)
(74) Representative: Schollweck, Susanne

(57) **Abstract**

A track prediction method and device for an obstacle at a junction are provided according to embodiments of the present invention. The method includes: acquiring environment information of a junction to be passed by a vehicle, and acquiring information on a visible obstacle in a sensible range of the vehicle, wherein the environment information comprises road information and information on a junction obstacle located in an area of the junction; combining the information on the junction obstacle with the information on the visible obstacle, and selecting information on a blind-zone obstacle in a blind zone of the vehicle at the junction; and predicting a moving track of an obstacle corresponding to the information on the blind-zone obstacle, according to the road information.

## Description

### TECHNICAL FIELD

The application relates to the technical field of self-driving, and more particularly to a track prediction method and device for an obstacle at a junction.

### BACKGROUND

In existing technologies, a track of a self-driving vehicle is required to be planned based on detection of a surrounding environment, and thus it is very important for the self-driving vehicle to fully detect obstacles around the self-driving vehicle. However, a detection range of the self-driving vehicle is limited, so a blind zone may be generated when the self-driving vehicle passes an environment such as a junction where there are more hidden objects or shelters. If the self-driving vehicle cannot detect an obstacle in the blind zone, a track thereof cannot be planned according to the obstacle in the blind zone. Consequently, the self-driving vehicle may not timely avoid the obstacle that suddenly appears in the blind zone when passing the junction, and travelling safety of the vehicle is reduced.

The above information disclosed in the BACKGROUND is only adopted to strengthen an understanding to the background of the application and thus may include information not forming the conventional art well-known to those of ordinary skill in the art.

### SUMMARY

A track prediction method and device for an obstacle at a junction are provided according to embodiments of the application, to solve one or more technical problems in the existing technologies.

According to a first aspect, a track prediction method for an obstacle at a junction is provided according to an embodiment of the application, which may include:
acquiring environment information of a junction to be passed by a vehicle, and acquiring information on a visible obstacle in a sensible range of the vehicle, wherein the environment information comprises road information and information on a junction obstacle located in an area of the junction;
combining the information on the junction obstacle with the information on the visible obstacle, and selecting information on a blind-zone obstacle in a blind zone of the vehicle at the junction; and
predicting a moving track of an obstacle corresponding to the information on the blind-zone obstacle, according to the road information.

In an implementation, the acquiring environment information of a junction to be passed by a vehicle may include:
when a distance between the vehicle and the junction reaches a preset distance, receiving the environment information acquired by an acquisition device at the junction.

In an implementation, combining the information on the junction obstacle with the information on the visible obstacle, and selecting information on a blind-zone obstacle in a blind zone of the vehicle at the junction may include:
matching the information on the junction obstacle with the information on the visible obstacle;
determining whether the information on the junction obstacle and the information on the visible obstacle comprise identical information; and
if the information on the junction obstacle and the information on the visible obstacle comprise information on a same obstacle, obtaining the information on the blind-zone obstacle by removing the identical information from the information on the junction obstacle.

In an implementation, the determining whether the information on the junction obstacle and the information on the visible obstacle comprise identical information may include:
acquiring historical frame data of a first obstacle located at the junction, based on the information on the junction obstacle;
acquiring historical frame data of a second obstacle in a sensible range of the vehicle, based on the information on the visible obstacle;
performing feature matching to the historical frame data of the first obstacle and the historical frame data of the second obstacle by using a preset model; and
when a matching result is greater than a preset threshold, determining that information corresponding to the first obstacle and information corresponding to the second obstacle are identical.

In an implementation, the method may further include:
determining whether the information on the junction obstacle comprises information on the vehicle; and
if the information on the junction obstacle comprises the information on the vehicle, removing the information on the vehicle from the information on the junction obstacle.

In an implementation, predicting a moving track of an obstacle corresponding to the information on the blind-zone obstacle according to the road information may include:
acquiring historical frame data of the blind-zone obstacle based on the information on the obstacle; and
predicting a moving track of the blind-zone obstacle at the junction, according to junction environment information and signal light state information in the road information in combination with the historical frame data of the obstacle.

According to a second aspect, a track prediction device for an obstacle at a junction is provided according to an embodiment of the application, which may include:
an acquiring module configured to acquire environment information of a junction to be passed by a vehicle, and acquire information on a visible obstacle in a sensible range of the vehicle, wherein the environment information comprises road information and information on a junction obstacle located in an area of the junction;
a combining module configured to combine the information on the junction obstacle with the information on the visible obstacle, and select information on a blind-zone obstacle in a blind zone of the vehicle at the junction; and
a track predicting module configured to predict a moving track of an obstacle corresponding to the information on the blind-zone obstacle, according to the road information.

In an implementation, the acquiring module may include:
a receiving sub-module configured to, when a distance between the vehicle and the junction reaches a preset distance, receive the environment information acquired by an acquisition device at the junction.

In an implementation, the combining module may include:
a matching sub-module configured to match the information on the junction obstacle with the information on the visible obstacle; and
a determining sub-module configured to determine whether the information on the junction obstacle and the information on the visible obstacle comprise identical information; and if the information on the junction obstacle and the information on the visible obstacle comprise information on a same obstacle, obtain the information on the blind-zone obstacle by removing the identical information from the information on the junction obstacle.

In an implementation, the determining sub-module may include:
a first acquiring unit configured to acquire historical frame data of a first obstacle located at the junction, based on the information on the junction obstacle;
a second acquiring unit configured to acquire historical frame data of a second obstacle in a sensible range of the vehicle, based on the information on the visible obstacle;
a feature matching unit configured to perform feature matching to the historical frame data of the first obstacle and the historical frame data of the second obstacle by using a preset model; and
a determining unit configured to, when a matching result is greater than a preset threshold, determine that information corresponding to the first obstacle and information corresponding to the second obstacle are identical.

In an implementation, the device may further include:
an information removing module configured to determine whether the information on the junction obstacle comprises information on the vehicle; and if the information on the junction obstacle comprises the information on the vehicle, remove the information on the vehicle from the information on the junction obstacle.

In an implementation, the track predicting module may include:
an acquiring sub-module configured to acquire historical frame data of the blind-zone obstacle based on the information on the obstacle; and
a predicting sub-module configured to predict a moving track of the blind-zone obstacle at the junction, according to junction environment information and signal light state information in the road information in combination with the historical frame data of the obstacle.

According to a third aspect, a track prediction terminal for an obstacle at a junction is provided according to an embodiment of the application.

The functions of the terminal may be implemented by hardware, or by hardware executing corresponding software. The hardware or software includes one or more modules corresponding to the above functions.

In a possible embodiment, a structure of the track prediction terminal for an obstacle at the junction includes a processor and a storage device, the storage device is configured to store a program for supporting the above track prediction method according to the first aspect, executed by the track prediction terminal, and the processor is configured to execute the program stored in the storage device. The track prediction terminal further includes a communication interface configured for communication between the terminal and another apparatus or communication network.

According to a fourth aspect, a computer-readable storage medium is provided according to an embodiment of the application, for storing a program used by the track prediction terminal in the second aspect, and involved in execution of the above track prediction method in the first aspect.

One of the technical solutions has the following advantages and beneficial effects. According to the embodiments of the application, the environment information of the junction is acquired to solve the problem related to a blind zone before the vehicle arrives at the junction, thus improving a prediction capability of the vehicle for the obstacle at the junction.

The above summary is for the purpose of the specification only and is not intended to be limiting in any way. In addition to the illustrative aspects, embodiments, and features described above, further aspects, embodiments, and features of the application will be readily understood by reference to the drawings and the following detailed description.

### BRIEF DESCRIPTION OF DRAWINGS

In the drawings, unless otherwise specified, identical reference numerals will be used throughout the drawings to refer to identical or similar parts or elements. The drawings are not necessarily drawn to scale. It should be understood that these drawings depict only some embodiments disclosed in accordance with the application and are not to be considered as limiting the scope of the application.
FIG. 1 is a flowchart of a track prediction method for an obstacle at a junction according to an implementation of the application.
FIG. 2 is a flowchart of S200 of a track prediction method for an obstacle at a junction according to an implementation of the application.
FIG. 3 is a flowchart of S220 of a track prediction method for an obstacle at a junction according to an implementation of the application.
FIG. 4 is a flowchart of a track prediction method for an obstacle at a junction according to another implementation of the application.
FIG. 5 is a flowchart of S300 of a track prediction method for an obstacle at a junction according to an implementation of the application.
FIG. 6 is a schematic diagram of an application scenario of a track prediction method for an obstacle at a junction according to an implementation of the application.
FIG. 7 is a structure diagram of a track prediction device for an obstacle at a junction according to an implementation of the application.
FIG. 8 is a structure diagram of a track prediction device for an obstacle at a junction according to an implementation of the application.
FIG. 9 is a structure diagram of a track prediction terminal for an obstacle at a junction according to an implementation of the application.

### DETAILED DESCRIPTION

In the following, only certain exemplary embodiments are briefly described. As those skilled in the art would realize, the described embodiments may be modified in various different ways, all without departing from the spirit or scope of the application. Accordingly, the drawings and description are to be regarded as illustrative in nature and not restrictive.

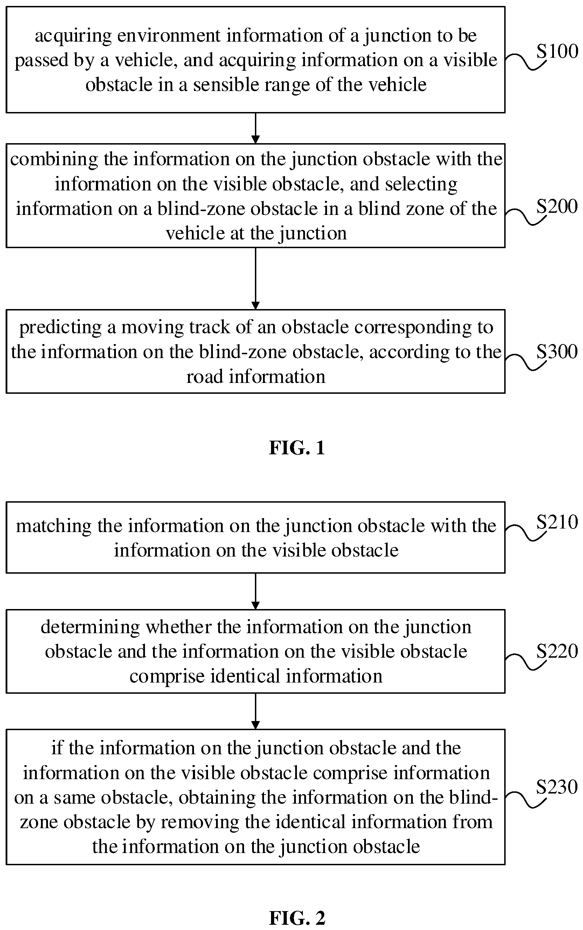

A track prediction method for an obstacle at a junction is provided according to an embodiment of the application, which, as shown in FIG. 1, includes steps S100 to S300.

In S 100, environment information of a junction to be passed by a vehicle is acquired, and information on a visible obstacle in a sensible range of the vehicle is acquired, wherein the environment information comprises road information and information on a junction obstacle located in an area of the junction.

It is noted that the visible obstacle may be an object appearing in the sensible range of a current vehicle (usually a detection range of the vehicle), such as an obstacle vehicle, a pedestrian and a barricade. The junction obstacle may be an object located in an area of the junction, such as an obstacle vehicle, a pedestrian and a barricade. The obstacle vehicle may include any type of vehicles, such as a manned vehicle, a self-driving vehicle, a bicycle, a motorcycle and an electric vehicle. The road information may include information such as a type of the junction, a traffic rule at the junction, a curvature of the junction, a connecting relationship of the junction, and information on traffic lights at the junction. For different vehicles, visible obstacles for different vehicles may be different. Information on the visible obstacle for each vehicle and information on the junction obstacle may include identical information.

The environment information at the junction may be acquired before the vehicle arrives at the junction. For example, the environment information at the junction is acquired in advance when the vehicle cannot fully detect the information on the visible obstacle at the junction. Acquiring the environment information at the junction to be passed by the current vehicle in advance enables the current vehicle to timely avoid the obstacle at the junction when passing the junction and improve the driving safety of the current vehicle.

The sensible range of the current vehicle may include a detection range of an acquisition device such as a radar, a sensor and a camera on the current vehicle, which may be used for detecting environment information around the current vehicle.

In S200, the information on the junction obstacle is combined with the information on the visible obstacle, and information on a blind-zone obstacle in a blind zone of the vehicle at the junction is selected.

It is noted that all of the objects appearing at the junction may be junction obstacles. The information on the junction obstacle may include related information on each obstacle appearing at the junction. For example, the information on the junction obstacle includes information about a position, a size, a historical physical state and the like of each junction obstacle. The information on a historical physical state may include information such as a speed, an acceleration, a heading angle, a distance from a lane line, and the like of the junction obstacle in each historical frame.

All of the objects appearing in the sensible range of the current vehicle may be visible obstacles. The information on the visible obstacle may include related information of each visible obstacle in the sensible range of the current vehicle. For example, the information on the visible obstacle includes information on a position, a size, a historical physical state and the like of each visible obstacle. The information on a historical physical state may include information such as a speed, an acceleration, a heading angle, a distance from a lane line, a distance from the vehicle, and the like of the visible obstacle in each historical frame.

The blind-zone obstacle may include an obstacle that cannot be detected in the sensible range of the current vehicle at the junction before the current vehicle arrives at the junction. Information on the blind-zone obstacle may be a subset of the information on the junction obstacle.

In S300, a moving track of an obstacle corresponding to the information on the blind-zone obstacle is predicted according to the road information. A future possible track of each obstacle may be calculated through the acquired related information on each obstacle and the road information. Based on each predicted moving track of each blind-zone obstacle, a moving track of the current vehicle may further be planned based on the predicted moving track. Therefore, the current vehicle may pass the junction through a reasonable track and avoid the obstacles at the junction.

It is noted that at least one moving track is predicted for each obstacle. A specific number of moving tracks required to be predicted for each obstacle may be customized and selected according to a prediction requirement, a safe driving level or a decision planning algorithm, etc.

In an implementation, the operation of acquiring environment information of a junction to be passed by a vehicle may include:
when a distance between the vehicle and the junction reaches a preset distance, receiving the environment information acquired by an acquisition device at the junction.

It is noted that the preset distance may be customized and selected according to the prediction requirement of the vehicle, the safe driving level or the decision planning algorithm, etc., and the preset distance is less than or equal to a range of sending information sending by the acquisition device. The acquisition device may be any acquisition device capable of acquiring environment information of at the junction, such as a radar, a sensor and a camera. For example, the acquisition device may be a Vehicle to X (V2X) device. X represents any object, for example, a vehicle, a person, a road, a background, and so on. The V2X device can acquire information regardless of a visual blind zone and a shelter in acquiring, and may also exchange and share intelligent information with other vehicles and facilities.

In an application example, the preset distance is a hundred meters. The acquisition device is a V2X device and is mounted on a traffic light at the junction, so that all-round environment information at the junction may be acquired. The vehicle, when arriving to a position a hundred meters away from the junction, starts receiving the environment information at the junction sent by the V2X device in real time. The V2X device continuously acquires the environment information at the junction and continuously sends the environment information to the outside. The vehicle does not receive the environment information sent by the V2X device to the outside before arriving at the preset distance. The vehicle starts receiving the environment information sent by the V2X device to the outside only when arriving to the preset distance.

In an implementation, as shown in FIG. 2, the operation of combining the information on the junction obstacle with the information on the visible obstacle, and selecting information on a blind-zone obstacle in a blind zone of the vehicle at the junction may include S210 to S230.

In S210, the information on the junction obstacle is matched with the information on the visible obstacle.

In S220, it is determined whether the information on the junction obstacle and the information on the visible obstacle comprise identical information.

It is noted that the information on the junction obstacle includes the related information of each obstacle acquired at the junction. The information on the visible obstacle includes the related information of each obstacle in the sensible range of the current vehicle. According to different performances of the acquisition devices at the junction, if an acquisition range of the acquisition device at the junction is relatively large, it may be overlapped with the sensible range of the current vehicle. The obstacle in the sensible range of the current vehicle may be detected by the current vehicle through a sensor and the like, namely the vehicle may consider the track of the obstacle around during performing the decision planning for itself. Therefore, it is necessary to determine that the information on the junction obstacle and the information on the visible obstacle include identical information, or in other words, information on a same obstacle, to reduce a calculation cost and repeated calculation of current the vehicle.

In S230, if the information on the junction obstacle and the information on the visible obstacle comprise information on a same obstacle, the information on the blind-zone obstacle is obtained by removing the identical information from the information on the junction obstacle.

In an implementation, before S210 is executed, information that can be directly determined as not on a same obstacle may be rapidly removed from the information on the junction obstacle in a preliminary screening manner, specifically by:
acquiring a position of the junction obstacle in a high-definition map; and
acquiring a position of the visible obstacle in the high-definition map.

If a junction obstacle and a visible obstacle are located in the same region but the distance therebetween is relatively large, it is determined that the two obstacles are different obstacles. If a junction obstacle and a visible obstacle are located in the same region and the distance therebetween is relatively small, it is determined that the two obstacles are the same obstacle and both the information on the junction obstacle and the information on the visible obstacle include identical information, or in other words, information on the same obstacle. S210 and S220 are executed.

It is noted that the high-definition map is a high-definition precisely defined map, and a definition thereof may reach a decimeter level. The high-definition map constructs a real three-dimensional world and, besides shape information and topological relationships of absolute positions, even further includes attributes of a point cloud, semantics, a feature and the like. Not only may road-level navigation information and lane-level navigation information be provided, but also accurate vehicle position information and rich data information on road elements may be provided.

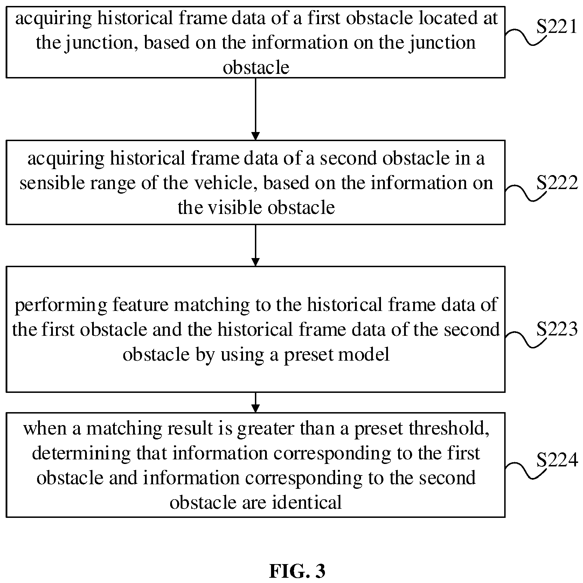

In an implementation, as shown in FIG. 3, the operation of determining whether the information on the junction obstacle and the information on the visible obstacle comprise identical information may include S221 to S224.

In S221, historical frame data of a first obstacle located at the junction is acquired based on the information on the junction obstacle. The historical frame data may include any information characterizing the first obstacle such as a speed, an acceleration, a position, a size, a heading angle and a distance from a lane line and the like of the first obstacle. The first obstacle may be a visible obstacle.

In S222, historical frame data of a second obstacle in a sensible range of the vehicle, based on the information on the visible obstacle is acquired. The historical frame data may include any information characterizing the second obstacle such as a speed, an acceleration, a position, a size, a heading angle, a distance from the lane line, a distance from the vehicle and the like of the second obstacle. The second obstacle may be a junction obstacle.

In S223, feature matching is performed to the historical frame data of the first obstacle and the historical frame data of the second obstacle by using a preset model. The preset model may be any model in the existing technologies as long as the feature matching between he first obstacle and the second obstacle, or in other words, comparing between the feature of the first obstacle and the feature of the second obstacle can be performed.

For example, the preset model may be a logistic regression model. The logistic regression model is a generalized linear regression analysis model. The matching value of the first obstacle with the second obstacle may be obtained by logistic regression analysis with the logistic regression model.

In S224, when a matching result is greater than a preset threshold, it is determined that information corresponding to the first obstacle and information corresponding to the second obstacle are identical.

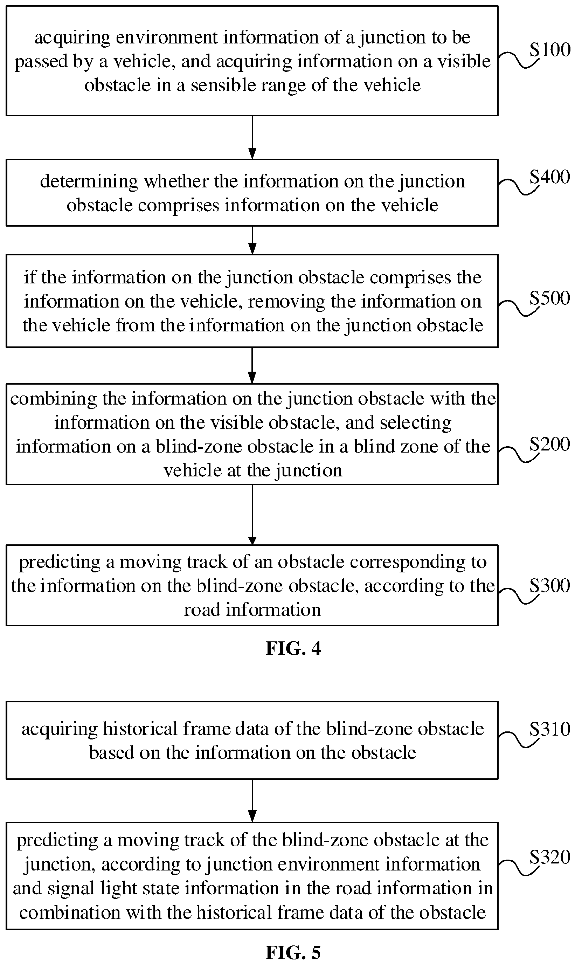

In an implementation, as shown in FIG. 4, after S1 10 is executed, the following steps are further included.

In S400, it is determined whether the information on the junction obstacle comprises information on the vehicle.

In S500, if the information on the junction obstacle comprises the information on the vehicle, the information on the vehicle is removed from the information on the junction obstacle.

The acquisition device at the junction implements indiscriminate acquisition at the junction when acquiring the environment information. Therefore, acquisition may also be performed on the current vehicle as an acquisition object when it enters the acquisition range of the acquisition device at the junction. The current vehicle may not be considered as an obstacle in the detection range of the current vehicle when detecting the obstacles around, and thus S200 is executed preferably after the information on the current vehicle in the information on the junction obstacle is removed, to avoid considering information on the current vehicle as the information on the junction obstacle for calculation.

In an implementation, as shown in FIG. 5, the road information includes junction environment information and state information on a signal light, and the operation of predicting a moving track of an obstacle corresponding to the information on the blind-zone obstacle according to the road information may include S310 to S320.

In S310, historical frame data of the blind-zone obstacle is acquired based on the information on the obstacle. The historical frame data may include various information characterizing the obstacle such as a speed, an acceleration, a position, a size, a heading angle, a distance from a lane line and the like of the obstacle.

In S320, a moving track of the blind-zone obstacle at the junction, is predicted according to the junction environment information and the signal light state information in the road information in combination with the historical frame data of the obstacle.

Information on the type of the junction, the traffic rule and the like may be obtained through the junction environment information. For example, when the type of the junction is a crossroad, a track of an obstacle at a certain junction may be directed to the other three junctions respectively. If a traffic rule of the junction is known, for example, the traffic rule of the junction is no left turn, and a direction of the track of the obstacle is limited to be directed to two junctions. Furthermore, based on this, state information of a signal light (such as a traffic light) at the junction may be acquired to further accurately predict the track of the obstacle. For example, when the current vehicle passes a junction in a crossroad, a signal light of another junction perpendicular to the junction is red, a blind-zone obstacle at the this another junction may not pass the junction and thus may not affect the track of the current vehicle. Furthermore, when a track of each blind-zone obstacle is predicted, historical frame data of the blind-zone obstacle may be determined as secondary prediction data or not as prediction data.

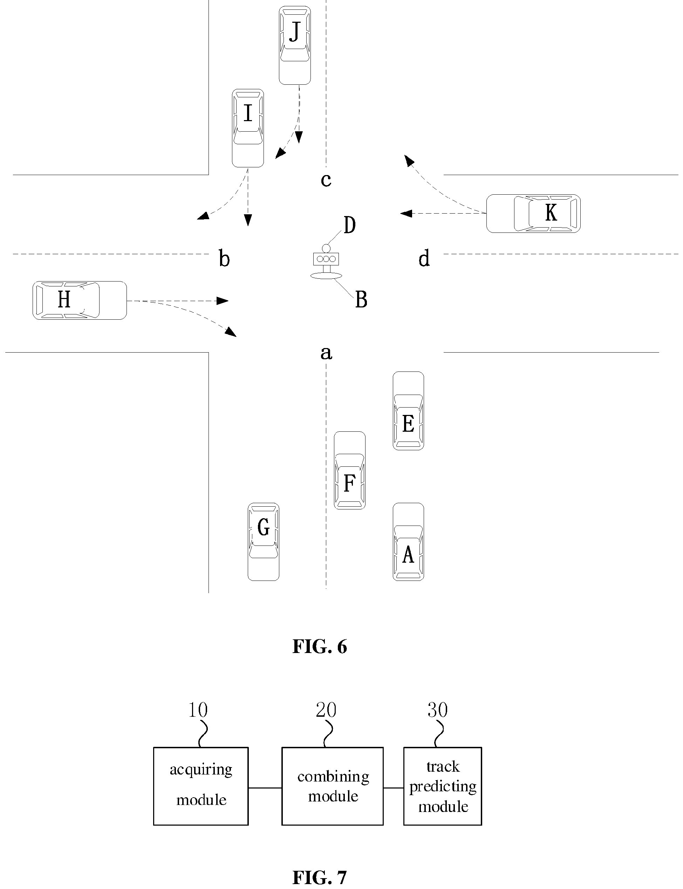

In an application example, as shown in FIG. 6, the junction is a crossroad, and the crossroad has junctions a, b, c and d. When a current vehicle A is about to pass the junction a. A signal light B is arranged in middle of the crossroad, and the signal light B has traffic lights facing the four junctions a, b, c and d respectively. A V2X device D is arranged at a top of the signal light B, and the V2X device D may acquire a state of each traffic light of the signal light B.

When the current vehicle A arrives at a position a hundred meters away from the junction a, the current vehicle A receives environment information of the junction sent by the V2X device. Information on the junction obstacles in the environment information includes information on eight vehicles, specifically, the current vehicle A, obstacle vehicle E, obstacle vehicle F and obstacle vehicle G in a road of the junction a, an obstacle vehicle H in a road of the junction b, an obstacle vehicle I and obstacle vehicle J in a road of the junction c and an obstacle vehicle K in a road of the junction d. In addition, information on the visible obstacles in a sensible range of the current vehicle A includes information on the obstacle vehicle E, the obstacle vehicle F and the obstacle vehicle G.

The current vehicle A determines, according to the received information on the junction obstacles, that the information on the junction obstacles includes information on itself and thus the information on the current vehicle A is removed from the information on the junction obstacles. Then, through a preset model and based on the information on the junction obstacles and the information on the visible obstacles and based on historical frame data of each obstacle vehicle, it is determined that the information on the obstacle vehicle E, the obstacle vehicle F and the obstacle vehicle G is information on the same obstacles, and thus the information on the obstacle vehicle E, the obstacle vehicle F and the obstacle vehicle G is removed from the information on the junction obstacles. Moreover, the information on the junction obstacles only including the information on the obstacle vehicle H, the obstacle vehicle I, the obstacle vehicle J and the obstacle vehicle K is determined as information on blind-zone obstacles of the current vehicle A.

According to road information, it can be seen that a left turn is not allowed at the crossroad. Therefore, junctions that the obstacle vehicle H is allowed to pass are the junction a and the junction d, junctions that the obstacle vehicle I and the obstacle vehicle J are allowed to pass are the junction b and the junction a, and junctions that the obstacle vehicle K is allowed to pass are the junction b and the junction c. Furthermore, according to state information of the traffic lights of the signal light B at the crossroad facing each junction, it can be seen that the traffic lights of the junction b and the junction d are red when the current vehicle A goes straight through the junction a and travels to the junction c. Therefore, when the current vehicle A passes the junction a, it is predicted that the obstacle vehicle H at the junction b may turn right to the junction a or be stopped, it is predicted that the obstacle vehicle K at the junction d may turn right to the junction c or be stopped, and it is predicted that the obstacle vehicle I and obstacle vehicle J at the junction c may go straight to the junction a or turn right to the junction b.

Then, specific tracks of the obstacle vehicle H, the obstacle vehicle I, the obstacle vehicle J and the obstacle vehicle K are predicted according to the historical frame data of the obstacle vehicle H, the obstacle vehicle I, the obstacle vehicle J and the obstacle vehicle K. The current vehicle A plans its track according to the predicted tracks of the obstacle vehicle H, the obstacle vehicle I, the obstacle vehicle J and the obstacle vehicle K.

A track prediction device for an obstacle at a junction according to an embodiment of the application, which, as shown in FIG. 7, includes:
an acquiring module 10 configured to acquire environment information of a junction to be passed by a vehicle, and acquire information on a visible obstacle in a sensible range of the vehicle, wherein the environment information comprises road information and information on a junction obstacle located in an area of the junction;
a combining module 20 configured to combine the information on the junction obstacle with the information on the visible obstacle, and select information on a blind-zone obstacle in a blind zone of the vehicle at the junction; and
a track predicting module 30 configured to predict a moving track of an obstacle corresponding to the information on the blind-zone obstacle, according to the road information.

In an implementation, the acquiring module includes:
a receiving sub-module configured to, when a distance between the vehicle and the junction reaches a preset distance, receive the environment information acquired by an acquisition device at the junction.

In an implementation, the combining module includes:
a matching sub-module configured to match the information on the junction obstacle with the information on the visible obstacle; and
a determining sub-module configured to determine whether the information on the junction obstacle and the information on the visible obstacle comprise identical information; and if the information on the junction obstacle and the information on the visible obstacle comprise information on a same obstacle, obtain the information on the blind-zone obstacle by removing the identical information from the information on the junction obstacle.

In an implementation, the determining sub-module includes:
a first acquiring unit configured to acquire historical frame data of a first obstacle located at the junction, based on the information on the junction obstacle;
a second acquiring unit configured to acquire historical frame data of a second obstacle in a sensible range of the vehicle, based on the information on the visible obstacle;
a feature matching unit configured to perform feature matching to the historical frame data of the first obstacle and the historical frame data of the second obstacle by using a preset model; and
a determining unit configured to, when a matching result is greater than a preset threshold, determine that information corresponding to the first obstacle and information corresponding to the second obstacle are identical.

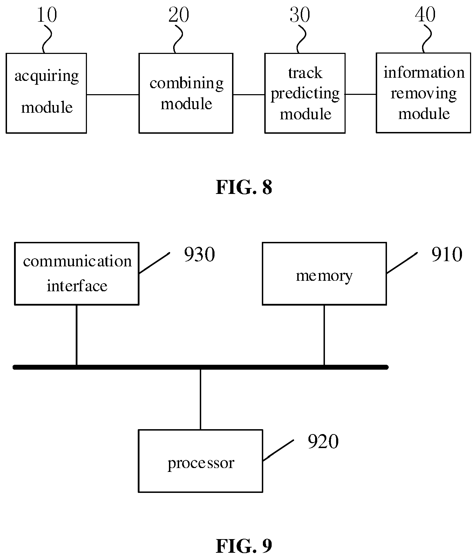

In an implementation, as shown in FIG. 8, the track prediction device for the obstacle at the junction further include:
an information removing module 40 configured to determine whether the information on the junction obstacle comprises information on the vehicle; and if the information on the junction obstacle comprises the information on the vehicle, remove the information on the vehicle from the information on the junction obstacle.

In an implementation, the road information comprises junction environment information and state information on a signal light, and the track predicting module includes:
an acquiring sub-module configured to acquire historical frame data of the blind-zone obstacle based on the information on the obstacle; and
a predicting sub-module configured to predict a moving track of the blind-zone obstacle at the junction, according to junction environment information and signal light state information in the road information in combination with the historical frame data of the obstacle.

A track prediction terminal for an obstacle at a junction is provided according to an embodiment of the application, which, as shown in FIG. 9, includes:
a memory 910 and a processor 920. The memory 910 stores a computer program executable on the processor 920. When the processor 920 executes the computer program, the method for processing an audio signal in a vehicle in the foregoing embodiment is implemented. The number of the memory 910 and the processor 920 may be one or more.

The track prediction terminal further includes: a communication interface 930 for communication between the processor 920 and an external device.

The memory 910 may include a high-speed RAM memory and may also include a non-volatile memory, such as at least one magnetic disk memory.

If the memory 910, the processor 920, and the communication interface 930 are implemented independently, the memory 910, the processor 920, and the communication interface 930 may be connected to each other through a bus and communicate with one another. The bus may be an Industry Standard Architecture (ISA) bus, a Peripheral Component (PCI) bus, an Extended Industry Standard Component (EISA) bus, or the like. The bus may be divided into an address bus, a data bus, a control bus, and the like. For ease of illustration, only one bold line is shown in FIG. 9, but it does not mean that there is only one bus or one type of bus.

Optionally, in a specific implementation, if the memory 910, the processor 920, and the communication interface 930 are integrated on one chip, the memory 910, the processor 920, and the communication interface 930 may implement mutual communication through an internal interface.

According to an embodiment of the application, a computer-readable storage medium is provided for storing computer software instructions, which include programs involved in execution of the above the method.

In the description of the specification, the description of the terms "one embodiment," "some embodiments," "an example," "a specific example," or "some examples" and the like means the specific features, structures, materials, or characteristics described in connection with the embodiment or example are included in at least one embodiment or example of the application. Furthermore, the specific features, structures, materials, or characteristics described may be combined in any suitable manner in any one or more of the embodiments or examples. In addition, different embodiments or examples described in this specification and features of different embodiments or examples may be incorporated and combined by those skilled in the art without mutual contradiction.

In addition, the terms "first" and "second" are used for descriptive purposes only and are not to be construed as indicating or implying relative importance or implicitly indicating the number of indicated technical features. Thus, features defining "first" and "second" may explicitly or implicitly include at least one of the features. In the description of the application, "a plurality of' means two or more, unless expressly limited otherwise.

Any process or method descriptions described in flowcharts or otherwise herein may be understood as representing modules, segments or portions of code that include one or more executable instructions for implementing the steps of a particular logic function or process. The scope of the preferred embodiments of the application includes additional implementations where the functions may not be performed in the order shown or discussed, including according to the functions involved, in substantially simultaneous or in reverse order, which should be understood by those skilled in the art to which the embodiment of the application belongs.

Logic and/or steps, which are represented in the flowcharts or otherwise described herein, for example, may be thought of as a sequencing listing of executable instructions for implementing logic functions, which may be embodied in any computer-readable medium, for use by or in connection with an instruction execution system, device, or apparatus (such as a computer-based system, a processor-included system, or other system that fetch instructions from an instruction execution system, device, or apparatus and execute the instructions). For the purposes of this specification, a "computer-readable medium" may be any device that may contain, store, communicate, propagate, or transport the program for use by or in connection with the instruction execution system, device, or apparatus. More specific examples (not a non-exhaustive list) of the computer-readable media include the following: electrical connections (electronic devices) having one or more wires, a portable computer disk cartridge (magnetic device), random access memory (RAM), read only memory (ROM), erasable programmable read only memory (EPROM or flash memory), optical fiber devices, and portable read only memory (CDROM). In addition, the computer-readable medium may even be paper or other suitable medium upon which the program may be printed, as it may be read, for example, by optical scanning of the paper or other medium, followed by editing, interpretation or, where appropriate, process otherwise to electronically obtain the program, which is then stored in a computer memory.

It should be understood that various portions of the application may be implemented by hardware, software, firmware, or a combination thereof. In the above embodiments, multiple steps or methods may be implemented in software or firmware stored in memory and executed by a suitable instruction execution system. For example, if implemented in hardware, as in another embodiment, they may be implemented using any one or a combination of the following techniques well known in the art: discrete logic circuits having a logic gate circuit for implementing logic functions on data signals, application specific integrated circuits with suitable combinational logic gate circuits, programmable gate arrays (PGA), field programmable gate arrays (FPGAs), and the like.

Those skilled in the art may understand that all or some of the steps carried in the methods in the foregoing embodiments may be implemented by a program instructing relevant hardware. The program may be stored in a computer-readable storage medium, and when executed, one of the steps of the method embodiment or a combination thereof is included.

In addition, each of the functional units in the embodiments of the application may be integrated in one processing module, or each of the units may exist alone physically, or two or more units may be integrated in one module. The above-mentioned integrated module may be implemented in the form of hardware or in the form of software functional module. When the integrated module is implemented in the form of a software functional module and is sold or used as an independent product, the integrated module may also be stored in a computer-readable storage medium. The storage medium may be a read only memory, a magnetic disk, an optical disk, or the like.

The foregoing descriptions are merely specific embodiments of the application, but not intended to limit the protection scope of the application. Those skilled in the art may easily conceive of various changes or modifications within the technical scope disclosed herein, all these should be covered within the protection scope of the application. Therefore, the protection scope of the application should be subject to the protection scope of the claims.

## Claims

1. A track prediction method for an obstacle at a junction, comprising:
acquiring (S 100) environment information of a junction to be passed by a vehicle, and acquiring information on a visible obstacle in a sensible range of the vehicle, wherein the environment information comprises road information and information on a junction obstacle located in an area of the junction;
combining (S200) the information on the junction obstacle with the information on the visible obstacle, and selecting information on a blind-zone obstacle in a blind zone of the vehicle at the junction; and
predicting (S300) a moving track of an obstacle corresponding to the information on the blind-zone obstacle, according to the road information.

2. The track prediction method of claim 1, wherein acquiring environment information of a junction to be passed by a vehicle comprises:
when a distance between the vehicle and the junction reaches a preset distance, receiving the environment information acquired by an acquisition device at the junction.

3. The track prediction method of claim 1, wherein combining the information on the junction obstacle with the information on the visible obstacle, and selecting information on a blind-zone obstacle in a blind zone of the vehicle at the junction comprises:
matching (S210) the information on the junction obstacle with the information on the visible obstacle;
determining (S220) whether the information on the junction obstacle and the information on the visible obstacle comprise identical information; and
if the information on the junction obstacle and the information on the visible obstacle comprise information on a same obstacle, obtaining (S230) the information on the blind-zone obstacle by removing the identical information from the information on the junction obstacle.

4. The track prediction method of claim 3, wherein determining whether the information on the junction obstacle and the information on the visible obstacle comprise identical information comprises:
acquiring (S221) historical frame data of a first obstacle located at the junction, based on the information on the junction obstacle;
acquiring (S222) historical frame data of a second obstacle in a sensible range of the vehicle, based on the information on the visible obstacle;
performing (S223) feature matching to the historical frame data of the first obstacle and the historical frame data of the second obstacle by using a preset model; and
when a matching result is greater than a preset threshold, determining (S224) that information corresponding to the first obstacle and information corresponding to the second obstacle are identical.

5. The track prediction method of claim 1, further comprising:
determining (S400) whether the information on the junction obstacle comprises information on the vehicle; and
if the information on the junction obstacle comprises the information on the vehicle, removing (S500) the information on the vehicle from the information on the junction obstacle.

6. The track prediction method of claim 1, wherein predicting a moving track of an obstacle corresponding to the information on the blind-zone obstacle according to the road information comprises:
acquiring (S310) historical frame data of the blind-zone obstacle based on the information on the obstacle; and
predicting (S320) a moving track of the blind-zone obstacle at the junction, according to junction environment information and signal light state information in the road information in combination with the historical frame data of the obstacle.

7. A track prediction device for an obstacle at a junction, comprising:
an acquiring module (10) configured to acquire environment information of a junction to be passed by a vehicle, and acquire information on a visible obstacle in a sensible range of the vehicle, wherein the environment information comprises road information and information on a junction obstacle located in an area of the junction;
a combining module (20) configured to combine the information on the junction obstacle with the information on the visible obstacle, and select information on a blind-zone obstacle in a blind zone of the vehicle at the junction; and
a track predicting module (30) configured to predict a moving track of an obstacle corresponding to the information on the blind-zone obstacle, according to the road information.

8. The track prediction device of claim 7, wherein the acquiring module comprises:
a receiving sub-module configured to, when a distance between the vehicle and the junction reaches a preset distance, receive the environment information acquired by an acquisition device at the junction.

9. The track prediction device of claim 7, wherein the combining module comprises:
a matching sub-module configured to match the information on the junction obstacle with the information on the visible obstacle; and
a determining sub-module configured to determine whether the information on the junction obstacle and the information on the visible obstacle comprise identical information; and if the information on the junction obstacle and the information on the visible obstacle comprise information on a same obstacle, obtain the information on the blind-zone obstacle by removing the identical information from the information on the junction obstacle.

10. The track prediction device of claim 9, wherein the determining sub-module comprises:
a first acquiring unit configured to acquire historical frame data of a first obstacle located at the junction, based on the information on the junction obstacle;
a second acquiring unit configured to acquire historical frame data of a second obstacle in a sensible range of the vehicle, based on the information on the visible obstacle;
a feature matching unit configured to perform feature matching to the historical frame data of the first obstacle and the historical frame data of the second obstacle by using a preset model; and
a determining unit configured to, when a matching result is greater than a preset threshold, determine that information corresponding to the first obstacle and information corresponding to the second obstacle are identical.

11. The track prediction device of claim 7, further comprising:
an information removing module (40) configured to determine whether the information on the junction obstacle comprises information on the vehicle; and if the information on the junction obstacle comprises the information on the vehicle, remove the information on the vehicle from the information on the junction obstacle.

12. The track prediction device of claim 7, wherein the track predicting module comprises:
an acquiring sub-module configured to acquire historical frame data of the blind-zone obstacle based on the information on the obstacle; and
a predicting sub-module configured to predict a moving track of the blind-zone obstacle at the junction, according to junction environment information and signal light state information in the road information in combination with the historical frame data of the obstacle.

13. A track prediction terminal for an obstacle at a junction, comprising:
one or more processors; and
a storage device, configured to store one or more programs,
the one or more programs, when executed by the one or more processors, cause the one or more processors to implement the track prediction method of any one of claims 1 to 6.

14. A computer-readable storage medium, storing a computer program, wherein the program is executed by a processor to implement the track prediction method of any one of claims 1 to 6.

15. A computer program product, comprising computer program instructions, that when executed by a processor, cause the processor to implement the method of any one of claims 1 to 6.
